(19) Europäisches Patentamt
European Patent Office
Office européen des brevets

(11) **EP 3 232 183 A1**

(12) **EUROPÄISCHE PATENTANMELDUNG**

(43) Veröffentlichungstag:
18.10.2017 Patentblatt 2017/42

(51) Int Cl.:
*G01N 21/77* (2006.01)    *B82Y 20/00* (2011.01)
*G01N 21/78* (2006.01)    *G02B 6/122* (2006.01)

(21) Anmeldenummer: 17155351.4

(22) Anmeldetag: 09.02.2017

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **11.04.2016 DE 102016205993**

(71) Anmelder: **Robert Bosch GmbH**
**70442 Stuttgart (DE)**

(72) Erfinder:
• **Caspers, Jan Niklas**
  **70178 Stuttgart (DE)**
• **Husnik, Martin**
  **70176 Stuttgart (DE)**
• **Petersen, Andreas**
  **71672 Marbach (DE)**

(54) **SENSORELEMENT ZUM DETEKTIEREN EINES MEDIUMS, VERFAHREN UND VORRICHTUNG ZUM DETEKTIEREN EINES MEDIUMS UND DETEKTIONSSYSTEM**

(57) Die Erfindung betrifft ein Sensorelement (102) zum Detektieren eines Mediums. Das Sensorelement (102) umfasst einen photonischen Kristall (108), der zumindest ein Anlagerungsfeld (110) zum Anlagern des Mediums und zumindest ein Referenzfeld (112) aufweist. Das Anlagerungsfeld (110) ist ausgebildet, um einen auf das Anlagerungsfeld (110) auftreffenden Lichtstrahl (114) mit einem von einer Anlagerungsmenge des Mediums auf dem Anlagerungsfeld (110) abhängigen Brechungsindex umzulenken. Das Referenzfeld (112) ist ausgebildet, um einen auf das Referenzfeld (112) auftreffenden Lichtstrahl (116) mit einem Referenzbrechungsindex umzulenken.

Fig. 1

EP 3 232 183 A1

**Beschreibung**

Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Ein optischer Sensor zum Detektieren eines Mediums kann beispielsweise als einfacher Teststreifen realisiert sein. Ein typisches Beispiel hierfür ist ein Schwangerschaftstest mit funktionalisierten Nanopartikeln, deren optische Eigenschaften sich durch die Anlagerung von Schwangerschaftshormonen ändern.

Ein optischer Sensor kann ferner als komplexes System aus integrierter Lichtquelle, Optik und Detektor mit Ausleseelektronik realisiert sein.

Offenbarung der Erfindung

Vor diesem Hintergrund werden mit dem hier vorgestellten Ansatz ein Sensorelement zum Detektieren eines Mediums, ein Verfahren zum Detektieren eines Mediums, weiterhin eine Vorrichtung, die dieses Verfahren verwendet, ein Detektionssystem sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Es wird ein Sensorelement zum Detektieren eines Mediums vorgestellt, wobei das Sensorelement folgendes Merkmal aufweist:

einen photonischen Kristall, der zumindest ein Anlagerungsfeld zum Anlagern des Mediums und zumindest ein Referenzfeld aufweist, wobei das Anlagerungsfeld ausgebildet ist, um einen auf das Anlagerungsfeld auftreffenden Lichtstrahl abzulenken,wobei diese Ablenkung abhängig von einer Anlagerungsmenge des Mediums auf dem Anlagerungsfeld ist, und das Referenzfeld ausgebildet ist, um einen auf das Referenzfeld auftreffenden Lichtstrahl unabhängig von einer Anlagerung umzulenken.

Unter einem Medium kann beispielsweise eine Flüssigkeit, ein Gas oder ein Festkörper oder ein Gemisch aus verschiedenartigen Medien verstanden werden. Unter einem photonischen Kristall kann eine räumlich periodische Struktur aus dielektrischen Materialien mit unterschiedlichem Brechungsindex verstanden werden. Bei den dielektrischen Materialien kann es sich beispielsweise um Halbleiter, Gläser oder Polymere handeln. Bei dem Anlagerungsfeld und dem Referenzfeld kann es sich um unterschiedliche Abschnitte einer Oberfläche des photonischen Kristalls handeln. Unter einem Umlenken eines Lichtstrahls kann beispielsweise eine Reflexion oder eine Beugung verstanden werden. Hierbei kann ausgenutzt werden, dass ein photonischer Kristall mindestens zwei Materialien mit zwei Brechungsindizes aufweist; die Ablenkung geschieht dann durch die spezifische räumliche Verteilung dieser zwei Medien und damit Brechungsindizes.

Der hier vorgestellte Ansatz beruht auf der Erkenntnis, dass durch die Verwendung eines photonischen Kristalls in einem Sensorelement eine quantitative Bestimmung eines Mediums ermöglicht wird, indem eine durch eine Anlagerung des Mediums an dem photonischen Kristall hervorgerufene Änderung eines Brechungsindex des photonischen Kristalls mit einem Referenzbrechungsindex bezüglich des photonischen Kristalls verglichen wird. Der Referenzbrechungsindex kann beispielsweise durch einen nicht funktionalisierten Bereich des photonischen Kristalls definiert sein.

Ein solches Sensorelement bietet den Vorteil geringer Herstellungskosten sowie einer einfachen und vielseitigen Anwendung in der Praxis, insbesondere als mobiles Sensorelement, etwa in Kombination mit einem Smartphone.

Von Vorteil ist eine Ausführungsform des hier vorgestellten Ansatzes, bei dem der photonische Kristall einen Brechungsindex mindestens eines Materials im Anlagerungsfeld aufweist, der abhängig von der Anlagerungsmenge ist, während im Referenzfeld der Brechungsindex aller Materialien konstant ist. Eine solche Ausführungsform des hier vorgestellten Ansatzes bietet den Vorteil, eine technisch einfach umzusetzende und dennoch sehr präzise und hochgenaue Messung der Menge des Mediums zu ermöglichen.

Günstig ist weiterhin eine Ausführungsform des hier vorgestellten Ansatzes, bei dem der photonische Kristall zumindest eine geometrische Eigenschaft, insbesondere die Periode des photonischen Kristalls, aufweist, die abhängig von der Anlagerung eines zu detektierenden Materials ist, während das Referenzfeld eine konstante geometrische Eigenschaft besitzt. Auch eine solche Ausführungsform des hier vorgestellten Ansatzes ist eine technisch einfach umzusetzende und dennoch sehr präzise und hochgenaue Messung der Menge des Mediums möglich.

Gemäß einer Ausführungsform können das Anlagerungsfeld und das Referenzfeld benachbart zueinander angeordnet sein. Beispielsweise können das Anlagerungsfeld und das Referenzfeld aneinandergrenzen. Dadurch kann eine Auswertung der umgelenkten Lichtstrahlen vereinfacht werden.

Gemäß einer weiteren Ausführungsform können das Anlagerungsfeld und das Referenzfeld konzentrisch zueinander angeordnet sein. Hierbei kann beispielsweise eines der beiden Felder ringförmig ausgestaltet sein, wobei das andere der beiden Felder innerhalb des ringförmig ausgestalteten Feldes angeordnet sein kann. Dadurch wird eine besonders kompakte Anordnung der beiden Felder ermöglicht.

Es ist vorteilhaft, wenn das Anlagerungsfeld durch einen funktionalisierten Abschnitt einer Oberfläche des photonischen Kristalls und das Referenzfeld durch einen nicht funktionalisierten oder abweichend von dem Anlagerungsfeld funktionalisierten Abschnitt der Oberfläche gebildet ist. Unter einem funktionalisierten Abschnitt kann beispielsweise ein zumindest teilweise mit einem bestimmten Material wie etwa einem Substrat oder einem Antikörper beschichteter Abschnitt der Oberfläche verstanden werden. Der funktionalisierte Abschnitt kann beispielsweise ausgebildet sein, um bestimmte Komponenten des Mediums zu binden. Beispielsweise kann der photonische Kristall im Bereich des Anlagerungsfeldes an der Oberfläche derart funktionalisiert sein, dass beim Kontakt mit dem Medium eine Änderung des Brechungsindex auftritt. Hierbei kann das Referenzfeld entweder keine Beschichtung aufweisen oder mit einer anderen Substanz als das Anlagerungsfeld beschichtet sein. Durch diese Ausführungsform können die jeweiligen optischen Eigenschaften des Anlagerungsfeldes und des Referenzfeldes gezielt beeinflusst werden.

Hierbei können das Anlagerungsfeld und das Referenzfeld zumindest teilweise unterschiedliche Materialien aufweisen. Beispielsweise kann das Anlagerungsfeld zumindest teilweise ein Halbleiter und das Referenzfeld zumindest teilweise ein Glas oder ein Polymer aufweisen. Durch diese Ausführungsform können das Anlagerungsfeld und das Referenzfeld mit unterschiedlichen optischen Eigenschaften realisiert werden.

Gemäß einer weiteren Ausführungsform kann der photonische Kristall im Wesentlichen quaderförmig ausgestaltet sein. Dadurch wird eine einfache Herstellung des photonischen Kristalls ermöglicht.

Es ist ferner von Vorteil, wenn der photonische Kristall zumindest ein weiteres Anlagerungsfeld zum Anlagern des Mediums und zumindest ein weiteres Referenzfeld aufweist. Hierbei kann das weitere Anlagerungsfeld ausgebildet sein, um einen auf das weitere Anlagerungsfeld auftreffenden Lichtstrahl mit einem von einer Anlagerungsmenge des Mediums auf dem weiteren Anlagerungsfeld abhängigen Brechungsindex umzulenken. Entsprechend kann das weitere Referenzfeld ausgebildet sein, um einen auf das weitere Referenzfeld auftreffenden Lichtstrahl mit dem Referenzbrechungsindex umzulenken. Dadurch kann die Effizienz des Sensorelements erhöht werden. Hierbei können das Anlagerungsfeld, das Referenzfeld, das weitere Anlagerungsfeld und das weitere Referenzfeld alternierend angeordnet sein. Beispielsweise können die Felder im Wesentlichen rauten- oder schachbrettmusterförmig zueinander angeordnet sein. Auch durch diese Ausführungsform kann die Effizienz des Sensorelements erhöht werden.

Der hier beschriebene Ansatz schafft zudem ein Verfahren zum Detektieren eines Mediums unter Verwendung eines Sensorelements gemäß einer der vorstehenden Ausführungsformen, wobei das Verfahren folgende Schritte umfasst:

Einlesen eines ersten Lichtsignals, das einen von dem Anlagerungsfeld umgelenkten Lichtstrahl repräsentiert, und eines zweiten Lichtsignals, das einen von dem Referenzfeld umgelenkten Lichtstrahl repräsentiert;

Auswerten des ersten Lichtsignals und des zweiten Lichtsignals, um eine Brechungsindexänderung des dem Anlagerungsfeld zugeordneten Brechungsindex zu ermitteln; und

Bestimmen der Anlagerungsmenge in Abhängigkeit von der Brechungsindexänderung.

Das erste oder zweite Lichtsignal kann beispielsweise von einer lichtsensitiven Einheit wie etwa einer Kamera, insbesondere beispielsweise einer Smartphonekamera, erzeugt worden sein.

Gemäß einer Ausführungsform kann im Schritt des Auswertens die Brechungsindexänderung durch Bilden einer Differenz aus einem Quadrat einer Wellenlänge des von dem Anlagerungsfeld umgelenkten Lichtstrahls und einem Quadrat einer Wellenlänge des von dem Referenzfeld umgelenkten Lichtstrahls ermittelt wird. Bei der Wellenlänge kann es sich jeweils beispielsweise um eine Wellenlänge mit der größten Reflexion handeln. Durch diese Ausführungsform kann eine Abhängigkeit der Auswertung der beiden Lichtsignale von einem Betrachtungswinkel vermieden werden.

Dieses Verfahren kann beispielsweise in Software oder Hardware oder in einer Mischform aus Software und Hardware, beispielsweise in einem Steuergerät, implementiert sein.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Schließlich schafft der hier beschriebene Ansatz ein Detektionssystem mit folgenden Merkmalen:

zumindest einem Sensorelement gemäß einer der vorstehenden Ausführungsformen; und

einer Vorrichtung gemäß einer vorstehenden Ausführungsform.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:

Fig. 1 eine schematische Darstellung eines Detektionssystems gemäß einem Ausführungsbeispiel;

Fig. 2 eine schematische Darstellung einer Vorrichtung gemäß einem Ausführungsbeispiel;

Fig. 3 ein Diagramm zur Darstellung zweier Lichtsignale zur Auswertung durch eine Vorrichtung gemäß einem Ausführungsbeispiel; und

Fig. 4 ein Ablaufdiagramm eines Verfahrens gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

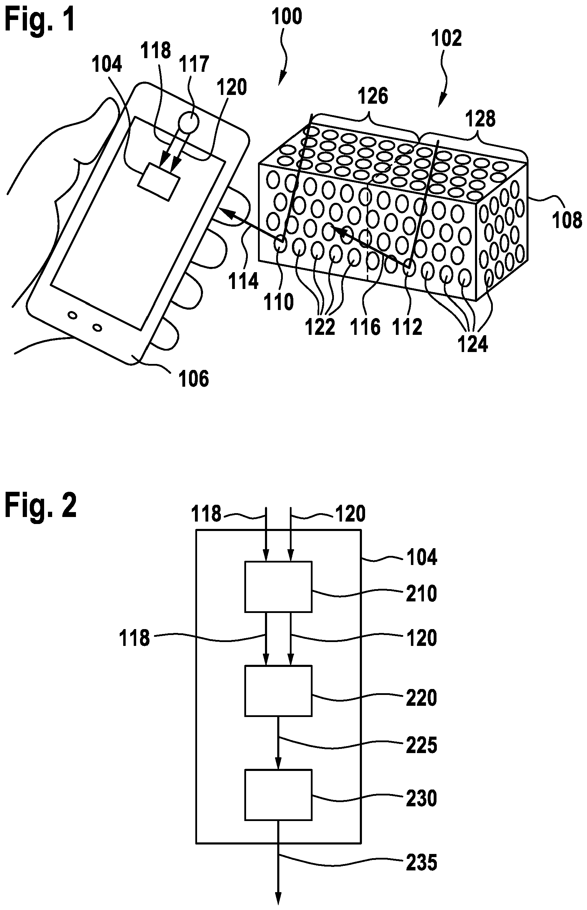

Fig. 1 zeigt eine schematische Darstellung eines Detektionssystems 100 gemäß einem Ausführungsbeispiel. Das Detektionssystem 100 umfasst ein Sensorelement 102 sowie eine Vorrichtung 104 zum Detektieren eines an dem Sensorelement 102 angelagerten Mediums. Beispielhaft ist die Vorrichtung 104 gemäß Fig. 1 in ein mobiles Endgerät 106 in Form eines Smartphones integriert. Das Sensorelement 102 umfasst einen hier quaderförmig ausgestalteten photonischen Kristall 108 mit einem Anlagerungsfeld 110 zum Anlagern des Mediums und einem Referenzfeld 112. Das Anlagerungsfeld 110 ist ausgebildet, um einen auf das Anlagerungsfeld 110 auftreffenden Lichtstrahl 114 mit einem Brechungsindex umzulenken, der von einer Menge des am Anlagerungsfeld 110 angelagerten Mediums abhängig ist. Das Referenzfeld 112 ist ausgebildet, um einen auf das Referenzfeld 112 auftreffenden Lichtstrahl 116 mit einem bestimmten Referenzbrechungsindex umzulenken. In Fig. 1 werden die beiden Lichtstrahlen 114, 116 jeweils zumindest teilweise reflektiert.

Das mobile Endgerät 106 ist mit einer Kamera 117 realisiert, die ausgebildet ist, um die beiden Lichtstrahlen 114, 116 zu erfassen und ein den Lichtstrahl 114 repräsentierendes erstes Lichtsignal 118 und ein den Lichtstrahl 116 repräsentierendes zweites Lichtsignal 120 an die Vorrichtung 104 zu senden. Die Vorrichtung 104 ist ausgebildet, um durch Vergleichen der beiden Lichtsignale 118, 120 eine Änderung des Brechungsindex des Anlagerungsfeldes 110 durch das Medium zu ermitteln. In Abhängigkeit von der Änderung bestimmt die Vorrichtung 104 die Menge des angelagerten Mediums. Beispielsweise kann die Vorrichtung 104 ausgebildet sein, um eine die Menge repräsentierende Information zu erzeugen, die etwa auf einem Bildschirm des mobilen Endgeräts 106 angezeigt werden kann.

Gemäß diesem Ausführungsbeispiel ist der photonische Kristall 108 mit einer Mehrzahl weiterer Anlagerungsfelder 122 zum Anlagern des Mediums sowie einer Mehrzahl weiterer Referenzfelder 124 realisiert. Analog zum Anlagerungsfeld 110 sind die weiteren Anlagerungsfelder 122 ausgebildet, um ihren jeweiligen Brechungsindex in Abhängigkeit von einer an dem jeweiligen weiteren Anlagerungsfeld angelagerten Menge des Mediums zu ändern. Hierbei können das Anlagerungsfeld 110 und die weiteren Anlagerungsfelder 122 im Wesentlichen identische optische Eigenschaften aufweisen. Die weiteren Referenzfelder 124 weisen wie das Referenzfeld 112 den Referenzbrechungsindex auf.

Wie in Fig. 1 zu erkennen, sind die Anlagerungsfelder 110, 122 in einer Anlagerungszone 126, die sich in etwa bis zu einer durch eine gestrichelte Linie markierte Längsmitte des photonischen Kristalls 108 erstreckt, benachbart zueinander angeordnet. Die Anlagerungszone 126 kann sich hierbei auch über eine Stirnfläche des photonischen Kristalls 108 erstrecken. Ein übriger Bereich des photonischen Kristalls 108 fungiert als Referenzzone 128, in der die Referenzfelder 112, 124 benachbart zueinander angeordnet sind. Auch die Referenzzone 128 kann sich über eine Stirnfläche des photonischen Kristalls 108 erstrecken. Die beiden Zonen 126, 128 können im Bereich der Längsmitte aneinandergrenzen.

Alternativ können die Anlagerungsfelder 110, 122 und die Referenzfelder 112, 124 alternierend zueinander angeordnet sein.

Bei dem photonischen Kristall 108 kann es sich um einen teilweise, insbesondere im Bereich der Anlagerungszone 126, funktionalisierten photonischen Kristall handeln. Ein Funktionsprinzip eines solchen photonischen Kristalls soll nachfolgend kurz erläutert werden. Eine Wellenlänge mit der größten Reflexion des photonischen Kristalls kann mittels des Bragg-Snell-Gesetzes kalkuliert werden:

$$\lambda = 2D\left(n_{eff}^2 - \cos^2\theta\right)^{\frac{1}{2}}$$

Hier ist ist $\lambda$ die Wellenlänge mit der größten Reflexion, D der Abstand der Ebenen, $n_{eff}$ der gemittelte Brechungsindex der Struktur und $\theta$ der Winkel. Das heißt, wenn der zu sensierende Stoff in Kontakt mit der funktionalisierten Schicht kommt, ändert sich der Brechungsindex und verursacht damit eine in Reflexion sichtbare Farbänderung. Da die Änderung des Brechungsindex und die Wellenlängenverschiebung proportional zur angelagerten Stoffmenge ist, können quantitative Ergebnisse erzielt werden. Allerdings ist die Wellenlängenverschiebung auch proportional zum Einfallswinkel, d. h., es ist ein genau kontrollierter Winkel erforderlich, der einen justierten und damit teuren optischen Aufbau erfordern kann. Zudem ist eine absolute Farbänderung schlecht detektierbar, da die Lichtquelle auch das Reflexionsspektrum bestimmt, diese also genau kontrolliert werden sollte. Der hier vorgestellte Ansatz ermöglicht nun durch die Detektion eines Farbunterschieds zwischen funktionalisierten und nicht funktionalisierten Bereichen des photonischen Kristalls 108 eine Quantifizierung des Mediums. Dadurch können die Winkelabhängigkeit des Messsignals und somit eine Verfälschung des Ergebnisses sowie die Schwierigkeit einer absoluten Farbbestimmung durch das menschliche Auge vermieden werden. Ferner kann dadurch die Verwendung einer definierten, unter Umständen kostenintensiven Lichtquelle entfallen.

Somit kann nicht nur die Existenz, sondern auch die Konzentration des Mediums bestimmt werden. Durch das Nutzen einer Referenzstruktur, auch Referenzfeld genannt, kann das Ergebnis beispielsweise mittels einer heutzutage weit verbreiteten Smartphonekamera ausgelesen werden. Die Referenzstruktur erlaubt es auch, eventuelle Störungen im Messsignal, die etwa durch die Winkelabhängigkeit oder das Lichtspektrum verursacht sein können, zu korrigieren und verlässlich abzugleichen.

Beispielsweise umfasst das Sensorelement 102 einen photonischen Kristall, der nur zum Teil funktionalisiert wurde. Durch Anlagerung der zu messenden Substanz wird der optische Brechungsindex in dem funktionalisierten Teil des photonischen Kristalls 108 verändert. Das Reflexionsspektrum des photonischen Kristalls 108 nahe der photonischen Bandlücke hängt nun gerade von diesem Brechungsindex ab und ändert sich dementsprechend. Das Problem in der üblichen Anwendung eines photonischen Kristalls liegt in einer gleichzeitig existierenden Abhängigkeit vom Betrachtungswinkel. Diese Abhängigkeit wird durch die Nutzung der Referenzstruktur gemäß folgender Gleichung vermieden:

$$\lambda_{funct}^2 - \lambda_{ref}^2 = 4D^2\left(\left(n_{funct}^2 - \cos^2\theta\right) - \left(n_{Ref}^2 - \cos^2\theta\right)\right) = 2D\left(n_{funct}^2 - n_{Ref}^2\right)$$

Hierbei kann die Brechungsindexänderung des funktionalisierten Bereichs durch die quadratische Differenz des Wellenlängenpeaks bestimmt werden. Dies ermöglicht einen sehr günstigen optischen Sensor, der ein quantitatives Ergebnis liefern kann.

Der photonische Kristall 108 kann in folgender Weise ausgeführt sein:

- mindestens zwei Felder, beispielsweise erstes Feld funktionalisiert, zweites Feld nicht funktionalisiert;

- mehr als zwei Felder, beispielsweise im Schachbrettmuster angeordnet, die abwechselnd funktionalisiert oder nicht funktionalisiert oder verschieden funktionalisiert sind oder verschiedene photonische Kristalle in verschiedenen Feldern aufweisen;

- Ringstrukturen mit konzentrischen Kreisen, die verschieden funktionalisiert sind.

Fig. 2 zeigt eine schematische Darstellung einer Vorrichtung 104 gemäß einem Ausführungsbeispiel. Bei der Vorrichtung 104 kann es sich um eine vorangehend anhand von Fig. 1 beschriebene Vorrichtung handeln. Die Vorrichtung 104 umfasst eine Einleseeinheit 210, die ausgebildet ist, um die beiden Lichtsignale 118, 120 einzulesen. Die Einleseeinheit 210 leitet die beiden Lichtsignale 118, 120 an eine Auswerteeinheit 220 weiter, die ausgebildet ist, um die beiden Lichtsignale hinsichtlich einer Änderung des dem Anlagerungsfeld zugeordneten Brechungsindex auszuwerten. Als Ergebnis der Auswertung sendet die Auswerteeinheit 220 ein die Änderung repräsentierendes Änderungssignal 225 an eine Bestimmungseinheit 230, die ausgebildet ist, um unter Verwendung des Änderungssignals 225 die Anlagerungsmenge des Mediums in Abhängigkeit von der Änderung des Brechungsindex zu bestimmen. Als Ergebnis der Bestimmung erzeugt die Bestimmungseinheit 230 ein die Anlagerungsmenge repräsentierendes Mengensignal 235.

Je nach Ausführungsbeispiel ist die Vorrichtung 104 entweder als separate Einheit oder als Komponente eines mobilen Endgeräts wie etwa eines Smartphones realisiert. Die Vorrichtung 104 und das Sensorelement können beispielsweise auch in einem Detektionsmodul miteinander kombiniert sein.

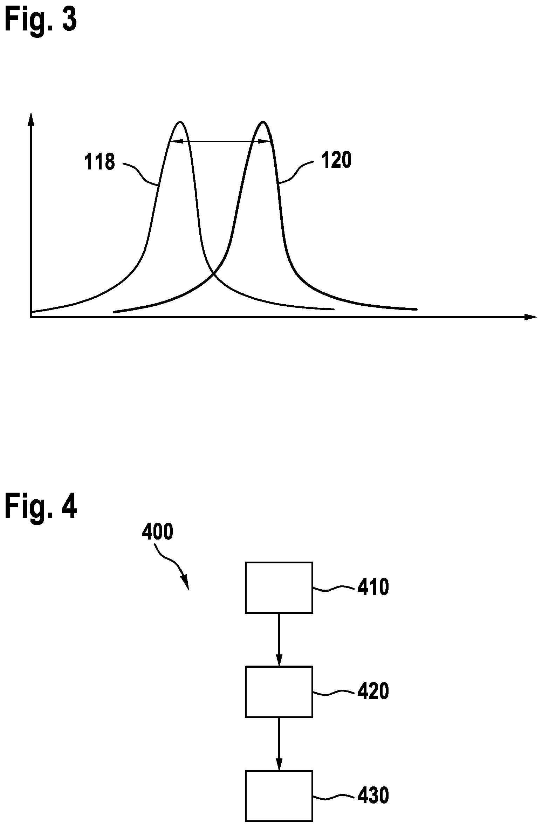

Fig. 3 zeigt ein Diagramm zur Darstellung der Intensität zweier Lichtsignale 118, 120 über die Zeit zur Auswertung durch eine Vorrichtung gemäß einem Ausführungsbeispiel, etwa einer vorangehend anhand der Figuren 1 und 2 beschriebenen Vorrichtung. Die beiden Lichtsignale 118, 120 verlaufen zueinander versetzt. Dieser Versatz rührt beispielsweise von einer Änderung des Brechungsindex im Anlagerungsfeld aufgrund des daran haftenden Mediums. Die Änderung des Brechungsindex kann sich in einer sichtbaren Farbänderung in einer Reflexion des dem Lichtsignal 118 zugrunde liegenden Lichtstrahls äußern.

Fig. 4 zeigt ein Ablaufdiagramm eines Verfahrens 400 gemäß einem Ausführungsbeispiel. Das Verfahren 400 zum Detektieren eines Mediums kann beispielsweise im Zusammenhang mit einer vorangehend anhand der Figuren 1 bis 3 beschriebenen Vorrichtung durchgeführt werden. Hierbei werden in einem Schritt 410 das den von dem Anlagerungsfeld umgelenkten Lichtstrahl repräsentierende erste Lichtsignal sowie das den von dem Referenzfeld umgelenkten Lichtstrahl repräsentierende zweite Lichtsignal eingelesen. In einem weiteren Schritt 420 werden die beiden Lichtsignale ausgewertet, um die Änderung des Brechungsindex im Anlagerungsfeld zu ermitteln. Schließlich wird in einem Schritt 430 eine Menge des an dem Anlagerungsfeld angelagerten Mediums in Abhängigkeit von der Änderung des Brechungsindex bestimmt.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

**Patentansprüche**

1.  Sensorelement (102) zum Detektieren eines Mediums, wobei das Sensorelement (102) folgendes Merkmal aufweist:

    einen photonischen Kristall (108), der zumindest ein Anlagerungsfeld (110) zum Anlagern des Mediums und zumindest ein Referenzfeld (112) aufweist, wobei das Anlagerungsfeld (110) ausgebildet ist, um einen auf das Anlagerungsfeld (110) auftreffenden Lichtstrahl (114) abzulenken,
    wobei diese Ablenkung abhängig von einer Anlagerungsmenge des Mediums auf dem Anlagerungsfeld (110) ist, und das Referenzfeld (112) ausgebildet ist, um einen auf das Referenzfeld (112) auftreffenden Lichtstrahl (116) unabhängig von einer Anlagerung umzulenken.

2.  Sensorelement (102) gemäß Anspruch 1, **dadurch gekennzeichnet, dass** der photonische Kristall (108) einen Brechungsindex mindestens eines Materials im Anlagerungsfeld aufweist, der abhängig von der Anlagerungsmenge ist, während im Referenzfeld (112) der Brechungsindex aller Materialien unabhängig von der Anlagerung ist.

3.  Sensorelement (102) gemäß einem der vorangegangenen Ansprüche, **dadurch gekennzeichnet, dass** der photonische Kristall (108) zumindest eine geometrische Eigenschaft, insbesondere die Periode des photonischen Kristalls (108), aufweist, die abhängig von der Anlagerung eines zu detektierenden Materials ist, während das Referenzfeld (112) eine konstante geometrische Eigenschaft besitzt.

4.  Sensorelement (102) gemäß einem der vorangegangenen Ansprüche, **dadurch gekennzeichnet, dass** das Anlagerungsfeld (110) und das Referenzfeld (112) benachbart zueinander angeordnet sind und/oder dass das Anlagerungsfeld (110) und das Referenzfeld (112) konzentrisch zueinander angeordnet sind.

5. Sensorelement (102) gemäß einem der vorangegangenen Ansprüche, **dadurch gekennzeichnet, dass** das Anlagerungsfeld (110) durch einen funktionalisierten Abschnitt einer Oberfläche des photonischen Kristalls (108) und das Referenzfeld (112) durch einen nicht funktionalisierten oder abweichend von dem Anlagerungsfeld (110) funktionalisierten Abschnitt der Oberfläche gebildet ist.

6. Sensorelement (102) gemäß einem der vorangegangenen Ansprüche, **dadurch gekennzeichnet, dass** das Anlagerungsfeld (110) und das Referenzfeld (112) zumindest teilweise unterschiedliche Materialien aufweisen und/oder aus unterschiedlichen Materialien besteht.

7. Sensorelement (102) gemäß einem der vorangegangenen Ansprüche, **dadurch gekennzeichnet, dass** der photonische Kristall (108) im Wesentlichen quaderförmig ausgestaltet ist.

8. Sensorelement (102) gemäß einem der vorangegangenen Ansprüche, **dadurch gekennzeichnet, dass** der photonische Kristall (108) zumindest ein weiteres Anlagerungsfeld (122) zum Anlagern des Mediums und zumindest ein weiteres Referenzfeld (124) aufweist, wobei das weitere Anlagerungsfeld (122) ausgebildet ist, um einen auf das weitere Anlagerungsfeld (122) auftreffenden Lichtstrahl mit einem von einer Anlagerungsmenge des Mediums auf dem weiteren Anlagerungsfeld (122) abhängigen Brechungsindex umzulenken, und das weitere Referenzfeld (124) ausgebildet ist, um einen auf das weitere Referenzfeld (124) auftreffenden Lichtstrahl mit dem Referenzbrechungsindex umzulenken.

9. Sensorelement (102) gemäß Anspruch 8, **dadurch gekennzeichnet, dass** das Anlagerungsfeld (110), das Referenzfeld (112), das weitere Anlagerungsfeld (122) und das weitere Referenzfeld (124) alternierend angeordnet sind.

10. Verfahren (400) zum Detektieren eines Mediums unter Verwendung eines Sensorelements (102) gemäß einem der vorangegangenen Ansprüche, wobei das Verfahren (400) folgende Schritte umfasst:

Einlesen (410) eines ersten Lichtsignals (118), das einen von dem Anlagerungsfeld (110) umgelenkten Lichtstrahl (114) repräsentiert, und eines zweiten Lichtsignals (120), das einen von dem Referenzfeld (112) umgelenkten Lichtstrahl (116) repräsentiert;
Auswerten (420) des ersten Lichtsignals (118) und des zweiten Lichtsignals (120), um eine Brechungsindexänderung des dem Anlagerungsfeld (110) zugeordneten Brechungsindex zu ermitteln; und
Bestimmen (430) der Anlagerungsmenge in Abhängigkeit von der Brechungsindexänderung.

11. Verfahren (400) gemäß Anspruch 10, **dadurch gekennzeichnet, dass** im Schritt des Auswertens (420) die Brechungsindexänderung durch Bilden einer Differenz aus einem Quadrat einer Wellenlänge des von dem Anlagerungsfeld (110) umgelenkten Lichtstrahls (114) und einem Quadrat einer Wellenlänge des von dem Referenzfeld (112) umgelenkten Lichtstrahls (116) ermittelt wird.

12. Vorrichtung (104) mit Einheiten (210, 220, 230), die ausgebildet sind, um das Verfahren (400) gemäß Anspruch 10 oder 11 auszuführen und/oder anzusteuern.

13. Detektionssystem (100) mit folgenden Merkmalen:

zumindest einem Sensorelement (102) gemäß einem der Ansprüche 1 bis 9; und
einer Vorrichtung (104) gemäß Anspruch 12.

14. Computerprogramm, das ausgebildet ist, um das Verfahren (400) gemäß Anspruch 10 oder 11 auszuführen und/oder anzusteuern.

15. Maschinenlesbares Speichermedium, auf dem das Computerprogramm nach Anspruch 14 gespeichert ist.

Fig. 1

104   118   117   120

100   102

126   128

108

114

110   122   116   112   124

106

Fig. 2

118   120

104

210

118   120

220

225

230

235

# Fig. 3

# Fig. 4

Europäisches
Patentamt

European
Patent Office

Office européen
des brevets

# EUROPÄISCHER RECHERCHENBERICHT

Nummer der Anmeldung

EP 17 15 5351

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2012/058567 A1 (SAILOR MICHAEL J [US] ET AL) 8. März 2012 (2012-03-08) <br> * Abbildungen 1, 3, 5, 7A, 7C, 8 * <br> * Absatz [0025] - Absatz [0036] * <br> * Absatz [0043] - Absatz [0046] * <br> * Absatz [0061] * <br> * Absatz [0069] - Absatz [0075] * <br> * Absatz [0083] * <br> ----- | 1-7, 10-15 | INV. <br> G01N21/77 <br> B82Y20/00 <br> G01N21/78 <br> G02B6/122 |
| X | DUSTIN GALLEGOS ET AL: "Label-free biodetection using a smartphone", LAB ON A CHIP, Bd. 13, Nr. 11, 3. April 2013 (2013-04-03) , Seite 2124, XP055105954, ISSN: 1473-0197, DOI: 10.1039/c3lc40991k <br> * Zusammenfassung * <br> * Abbildungen 1, 2, 6B * <br> * Seite 2125, linke Spalte, Absatz 3 - rechte Spalte, Absatz 2 * <br> * Seite 2128, linke Spalte, Absatz 4 * <br> * Seite 2130, linke Spalte, Absatz 1 - rechte Spalte, Absatz 2 * <br> -& US 2014/193839 A1 (CUNNINGHAM BRIAN T [US]) 10. Juli 2014 (2014-07-10) <br> * Abbildungen 1B, 2A, 5, 9, 10, 11 * <br> * Absätze [0004] - [0008] * <br> * Absätze [0041] - [0043] * <br> * Absätze [0043], [0044], [0050], [0054], [0059] * <br> * Absätze [0065], [0071] * <br> ----- | 1,2,4,5, 8-15 | |
| X | DE 10 2012 219643 A1 (FRAUNHOFER GES ZUR FÖRDERUNG DER ANGEWANDTEN FORSCHUNG E V [DE]) 30. April 2014 (2014-04-30) <br> * Abbildung 1 * <br> * Absatz [0001] * <br> * Absätze [0022] - [0024] * <br> * Absätze [0041], [0048] * <br> ----- | 1-7 | |

| | RECHERCHIERTE SACHGEBIETE (IPC) |
|---|---|
| | G01N <br> B82Y <br> G02B |

Der vorliegende Recherchenbericht wurde für alle Patentansprüche erstellt

| Recherchenort | Abschlußdatum der Recherche | Prüfer |
|---|---|---|
| München | 22. Juni 2017 | Flentje, Farida |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 17 15 5351

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-06-2017

| Im Recherchenbericht angeführtes Patentdokument | Datum der Veröffentlichung | Mitglied(er) der Patentfamilie | Datum der Veröffentlichung |
|---|---|---|---|
| US 2012058567 A1 | 08-03-2012 | KEINE | |
| US 2014193839 A1 | 10-07-2014 | US 2014193839 A1<br>US 2015104860 A1<br>WO 2014107364 A1 | 10-07-2014<br>16-04-2015<br>10-07-2014 |
| DE 102012219643 A1 | 30-04-2014 | KEINE | |

EPO FORM P0461

Für nähere Einzelheiten zu diesem Anhang : siehe Amtsblatt des Europäischen Patentamts, Nr.12/82